# EUROPEAN PATENT SPECIFICATION

(11) **EP 2 688 333 B1**
(45) Date of publication and mention of the grant of the patent: **21.03.2018**
(21) Application number: 12792848.9
(22) Date of filing: 01.06.2012
(51) Int. Cl.: H04Q 9/00, H04W 24/04

(54) **PARALLEL MONITORING METHOD AND SYSTEM FOR COMMUNICATION BASE STATION POWER SOURCES**
PARALLELÜBERWACHUNGSVERFAHREN UND -SYSTEM FÜR STROMQUELLEN VON KOMMUNIKATIONSBASISSTATIONEN
PROCÉDÉ DE SURVEILLANCE PARALLÈLE ET SYSTÈME DESTINÉ À DES SOURCES D'ALIMENTATION DE STATION DE BASE DE COMMUNICATION

(30) Priority: 03.06.2011 CN 201110150097
(43) Date of publication of application: 22.01.2014
(73) Proprietor: ZTE Corporation, Shenzhen, Guangdong 518057 (CN)
(72) Inventor: XIONG, Yong, Shenzhen Guangdong 518057 (CN); LIU, Dongbo, Shenzhen Guangdong 518057 (CN)
(74) Representative: Garratt, Peter Douglas
(86) International application number: PCT/CN2012/076391
(87) International publication number: WO 2012/163295

(56) References cited:
- EP-A2- 1 511 151
- WO-A2-01/73921
- CN-A- 101 656 549
- CN-A- 101 662 784
- CN-Y- 201 063 808
- JP-A- 2010 146 278
- TW-B- I 296 168
- US-A1- 2010 007 207
- LI, CHONGJIAN: 'Communication Power Supply Technology' STANDARD AND MEASUREMENT (REVISED EDITION) January 2007, BEIJING: BEIJING UNIVERSITY OF POSTS AND TELECOMMUNICATIONS PRESS, pages 5 - 10, XP008160895

## Description

### Technical Field

The present disclosure relates to a communication technology, and in particular, to a method and system for parallel monitoring of single-stand base station power sources.

### Background of the Related Art

In the communication power sources, they can generally be divided into multi-stand large system power sources, single-stand base station power sources, embedded power sources and wall-mounted power sources, etc., according to system capacity and application scenarios. The capacity of the multi-stand large system power source is generally larger, which is above 1000A, and is comprised of multiple alternating current distribution boards, rectifier racks, direct current distribution boards in parallel. In general, it needs at least three or more than three cabinets (wherein, a standard cabinet have two specifications of 600mm and 800mm), to achieve a complete system. Therefore, the multi-stand large system power source is mainly used in a centralized power supply environment such as a central apparatus room, etc., and occupies a large room space. As the name suggests, both the embedded power sources and the wall-mounted power sources have small capacity and volume, which is below 200A, and is generally a corollary equipment. With the development and application of distributed power supply, the single-stand base station power source is most widely used with the most appropriate capacity (100A to 800A) and relative economic space (a standard cabinet). According to the statistics, in the annual sales of a certain power source device manufacturer, single-stand base station power source accounts for more than 70% of shipment quantity and more than 90% of shipment amount.

With the development of 3G and other telecommunication services, telecommunication operators use a large number of various devices, and desire to have a base station power source with a larger capacity. As many base stations and apparatus rooms are rented, the operator hopes that power source devices occupy the space as small as possible, and the multi-stand large system power source is subjected to be neglected; and the single-stand base station power source which can supply power in parallel and extend the capacity randomly is ready to come out. For example, when the capacity needed by a user is within 800A, it only needs one base station power source rack with 800A; when the service volume rises to 1600A, it only needs to be connected with another rack in parallel. The initial investment is saved, the space is saved, and the capacity is convenient to be extended.

When the base station power sources are connected in parallel, and if only the positive and negative rows for power supply are shorted and batteries, loads, etc., are applied in parallel, such physical connection is simple; but the critical technology and the maximum difficulty are that the power source monitoring units are connected in parallel for use, especially, the network interconnection between a plurality of monitoring units, cooperation operation between service softwares (for example, battery management), and networking of the background network management center. At present, there are mainly three kinds of methods for parallel monitoring of base station power sources as follows.

Method one: various parallel power sources are integrated into one power source device, and the background network management center is only communicated with one monitoring unit therein. This monitoring unit is referred to as a host monitoring unit, which coordinates and controls operation of all other slave monitoring units through an internal bus; receives all information contents (including real-time data, alarms, parameters, control, history information), etc., from all other slave monitoring units, collects them together and forms a larger data packet to communicate with the background network management center; receives a command issued by the network management center, and distributes the command to each slave monitoring unit to perform according to different command addresses or IDs. The benefits of this kind of centralized network management are that the management is unified and the information is complete. But the biggest defect is that the software is very complicated. There are much information interacted between the hosts and various slaves as well as between the network management center and the host, the program is highly complicated, and the requirement for storage space is very large. For example, the host needs to know battery temperatures on all the slaves, to compensate the temperature. The protocol data amount between the host and the network management center is also very large, that is, if any one of power source monitoring data changes, the software of the host may also be modified therewith; when a new parallel power source is added, the protocol data amount is becoming more and more, and the extension performance is very poor; and when device types of the host and the slaves are different and the software is not compatible, such centralized monitoring mode can hardly be achieved (the host needs to change the software, adds service functions supporting the slaves, and the added service functions are integrated with the local service functions). In addition, when the host fails or quits working, the whole system may be breakdown, unless the slave can take over to control, which in turn causes highly complicated programs of the slave.

Method two: each parallel power source is considered to be independent power source device, of which the monitoring unit is communicated with the background network management center independently. There is no data interaction between the host and the slaves. The host completes battery management and other controls (the host monitor controls directly rectifiers, circuit breakers, etc., of other parallel power sources through the internal bus) according to sampling data, parameter configurations and control procedures, etc., of itself; while the slave monitor cancels the control functions, and only keep the functions of data acquisition and recording. This mode is relatively simple, but utility and reliability of this mode is largely decreased. For example, a certain slave has a too high battery temperature and needs to exit equalized charging; but at this time, the host has a normal battery temperature, which may control all the rectifiers to continue to perform the equalized charging.

Method three: various parallel power sources are considered as independent power source devices, and the positive and negative rows for power supply are also not interconnected. Each monitoring unit thereof is communicated with the background network management center independently, and performs the monitoring function of the power source device of itself. There is no data interacted among various monitoring units, and each monitoring unit completes independently functions of data acquisition, alarm, display, communication and control, battery management, etc. In essence, they are multiple power sources with no correlation. In such case, it does not supply power in parallel actually, resources such as batteries, rectifiers, etc., of the power sources cannot be commonly used, the reliability of the system cannot be improved, and there are so many constraints on extending the capacity of the services.

Relevant technologies are also known from EP 1511151 A2(NIEHOFF &CO C E[US]) 2 MAY 2005; US 2010/007207 A1(PEUSER THOMAS[DE]) 14 JANUARY 2010; TW 1296168 B(PHOENIXTEC IND CO LTD [TW]) 21 21 APRIL 2008; AND WO 01/73921 A2(POWERWARE CORP [US]; LAUFENBERG DEREK[US]; JUNGWIRTH PETER [US] WADE) 4 OCTOBER 2001.

### Summary of the Invention

In order to solve the above technical problem, aspects of the present disclosure provide a method for parallel monitoring of communication base station power sources and a system for communication base station power sources, to solve the problems generated in the existing scheme for parallel monitoring of communication base station power sources.

The features of the method and system according to the present invention are defined in the independent claims.

Also provided is a method for parallel monitoring of communication base station power sources, comprising:
connecting a plurality of base station power sources in parallel, and interconnecting a monitoring unit of each base station power source with monitoring units of other base station power sources and connecting the monitoring unit with a background network management center;
each monitoring unit monitoring and managing a local power source device, and the monitoring units as slaves transmitting preliminary management results needed to be uniformed or synchronized by a system to a host to apply for arbitration;
the monitoring unit as the host performing system arbitration on the preliminary management results reported by the slaves and a preliminary management result of the host to obtain an arbitration result, and transmitting the arbitration result to the slaves; and
the monitoring unit as the host and the monitoring units as the slaves performing reloading according to the arbitration result.

Alternatively, a host state or a slave state of each monitoring unit is preset by the system, or is determined by each monitoring unit performing the following host competition steps:
each monitoring unit broadcasting a host application message and/or receiving host application messages from other monitoring units;
each monitoring unit competing for being the host according to the host application message(s) and a preset host competition rule;
a monitoring unit which becomes the host after the competition being configured as the host and accepting a registration from a slave; and a monitoring unit which does not become the host after the competition being configured as a slave and registering with the host.

Alternatively, each monitoring unit broadcasts the host application message when it does not listen for the host or receives a broadcast message that the host exits.

Alternatively, the above method further comprises: the monitoring unit as the host periodically broadcasting a time stamp message to the slave, the monitoring unit as the slave receiving the time stamp message transmitted by the host, and performing time synchronization according to the received time stamp message; and each monitoring unit listening for the host according to the time stamp message.

Alternatively, the step of each monitoring unit competing for being the host according to the host application message(s) and a preset host competition rule comprises:
judging whether each monitoring unit used to be a host, and the monitoring unit which used to be the host being preferable;
comparing an order of competing for being the host applied by various monitoring units, a monitoring unit which applies in the earliest or latest being preferable; or
the host application message carrying an unique local identifier, a monitoring unit with a minimum or maximum local identifier being preferable.

Alternatively, the preliminary management results needed to be uniformed or synchronized by the system comprise battery expected states, and the step of performing system arbitration according to the obtained preliminary management results comprises: taking the last battery expected state as the system arbitration result; or
the preliminary management results needed to be uniformed or synchronized by the system comprise voltage values expected to be output by rectifiers, and the step of performing system arbitration according to the obtained preliminary management results comprises: determining the system arbitration result using a principle of "taking the minimum value from all data" for a charge voltage and using a principle of "taking the maximum value from all data" for a discharge voltage; or
the preliminary management results needed to be uniformed or synchronized by the system comprise current values expected to be output by rectifiers; and the step of performing system arbitration according to the obtained preliminary management results comprises: determining the system arbitration result using a principle of current-equalize or proportional current-equalize.

Also provided is a system for monitoring communication base station power sources, comprising: a plurality of interconnected monitoring units, which are configured to monitor respectively a plurality of base station power sources connected in parallel and are connected with a background network management center; wherein, the monitoring unit comprises:
a local supervision module, configured to monitor and manage a power source device corresponding to the local monitoring unit, and when the local monitoring unit is a slave, transmit a preliminary management result needed to be uniformed or synchronized by the system to a host to apply for arbitration;
a system arbitration module, configured to, when the local monitoring unit is a host, perform system arbitration on the preliminary management result reported by the slave and a preliminary management result of the local device to obtain an arbitration result, and transmit the arbitration result to the slave; and
a local reloading unit, configured to perform reloading according to the arbitration result.

Alternatively, a host state or a slave state of the monitoring unit is preset by the system, or the monitoring unit further comprises a host competition module, which is configured to: broadcast a host application message and/or receive host application messages from other monitoring units, and compete for being the host according to the host application message(s) and a preset host competition rule; when the local monitoring unit becomes the host after the competition, configure the local monitoring unit as the host and accept registration from the slave(s), and when the local monitoring unit does not become the host after the competition, configure the local monitoring unit as the slave and register with a host.

Alternatively, the host competition module is configured to broadcast the host application message when it does not listen for the host or receives a broadcast message that the host exits.

Alternatively, the monitoring unit further comprises: a time synchronization module, which is configured to when the local monitoring unit is the host, periodically broadcast a time stamp message to the slave, when the local monitoring unit is the slave, receive the time stamp message transmitted by the host, and perform time synchronization according to the received time stamp message; and the host competition module is further configured to listen for the host according to the time stamp message.

Alternatively, the host competition rule comprises one or more of the following:
a monitoring unit which used to be a host being preferable;
a monitoring unit which applies for competing for being the host in the earliest or latest being preferable;
a monitoring unit with a minimum or maximum unique local identifier carried in the host application message being preferable.

Alternatively, the preliminary management results needed to be uniformed or synchronized by the system comprise battery expected states, and the system arbitration module is configured to perform system arbitration according to the obtained preliminary management results by the following way: taking the last battery expected state as the system arbitration result; or
the preliminary management results needed to be uniformed or synchronized by the system comprise voltage values expected to be output by rectifiers, and the system arbitration module is configured to perform system arbitration according to the obtained preliminary management results by the following way: determining the system arbitration result using a principle of "taking the minimum value from all data" for a charge voltage and using a principle of "taking the maximum value from all data" for a discharge voltage; or
the preliminary management results needed to be uniformed or synchronized by the system comprise current values expected to be output by rectifiers; and the system arbitration module is configured to perform system arbitration according to the obtained preliminary management results by the following way: determining the system arbitration result using a principle of current-equalize or proportional current-equalize.

The method and system according to the embodiments of the present disclosure implement battery management through the arbitration mechanism of the host monitoring unit according to the existing application environment, so as to simply and conveniently implement parallel monitoring of multiple power source racks, provide great reliability, reduce the implementation cost to the maximum extent, and meet the needs of the telecommunication operators.

### Brief Description of Drawings

FIG. 1 is a schematic diagram of a method for parallel monitoring of communication base station power sources according to an embodiment of the present disclosure;
FIG. 2 is a flowchart of each competition unit competing for being a host according to an aspect of the present disclosure;
FIG. 3 is a flowchart of a specific process of host competition according to an aspect of the present disclosure;
FIG. 4 is a flowchart for implementing parallel monitoring of battery management by host arbitration and slaves cooperation according to an aspect of the present disclosure;
FIG. 5 is a flowchart of host arbitration according to an aspect of the present disclosure; and
FIG. 6 is a schematic diagram of a module structure of a system for communication base station power sources according to an aspect of the present disclosure.

### Preferred Embodiments of the Present Invention

In a method and system for parallel monitoring of communication base station power sources according to aspects of the present disclosure, the battery management is implemented by a arbitration mechanism of a host monitoring unit; and specifically, the monitoring units of various base station power sources implement detection and management of their own power source devices respectively, and only deliver preliminary management results needed to be uniformed or synchronized by the system to the host for arbitration, and then each slave implements reloading according to an arbitration result; thus a parallel controlling scheme is provided with low cost, high reliability and easy implementation.

Aspects of the present disclosure will be described in detail in combination with accompanying drawings hereinafter. It should be illustrated that, the aspects and features can be combined with each other arbitrarily without conflict.

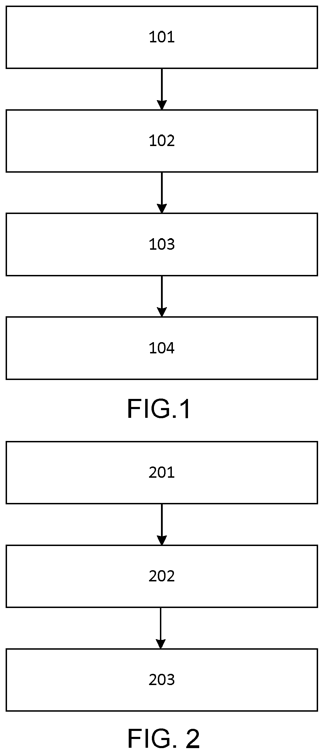

A method for parallel monitoring of communication base station power sources as shown in FIG. 1, comprises the following steps.

In step 101, a plurality of base station power sources are connected in parallel, and a monitoring unit of each base station power source is interconnected with monitoring units of the other base station power sources and connected with a background network management center.

Each base station power source individually completes alternating current power supply access, rectifier configuration, connecting load at positive and negative rows, batteries, etc. Each power source configures a respective monitoring unit; and in one aspect, all the parallel base station power sources configure respective monitoring units to implement monitoring and management of this power source device and communication with a background network management center. The positive and negative rows of the source powers are interconnected. Preferably, the monitoring units are interconnected through Ethernet interfaces to implement interaction between a host and slaves; and the Ethernet interface connected with the background network management center can be multiplexed.

The Ethernet interface is usually used for the network communication, the monitoring unit of each base station power source generally is connected with the background network management center through the Ethernet interface, and of course, can also be connected with other monitoring units (the host, the slaves) through this interface at the same time to complete arbitration and parallel control, i.e., implementing multiplexing: internal communication between monitoring units share the one Ethernet interface with external communication between the monitoring unit and the network management center.

In step 102, each monitoring unit monitors and manages the local power source device, and when the local device is a slave, the monitoring unit transmits a preliminary management result needed to be uniformed or synchronized by the system to a host to apply for arbitration.

A host state and a slave state of the monitoring unit can be preset by the system; preferably, as shown in FIG. 2, after being initiated, each monitoring unit can also determine the host state / the slave state by performing the following host competition steps.

In step 201, each monitoring unit broadcasts a host application message and/or receives host application messages from other monitoring units;
preferably, each monitoring unit broadcasts the host application message when it does not listen for the host or receives a broadcast message that the host exits.

The monitoring unit as the host is responsible for periodically broadcasting a time stamp message to the slaves, and the monitoring unit as the slave is responsible for receiving the time stamp message transmitted by the host and performing time synchronization according to the received time stamp message; and each monitoring unit listens for the host according to the time stamp message.

In step 202, each monitoring unit competes for being the host according to the host application message(s) and a preset host competition rule.

Host competition is implemented by a unique identifier such as ID or MAC address, etc., of each monitoring unit and information of whether the monitoring unit used to be the host at the last time. The monitoring unit which used to be the host at the last time is preferably recommended to continue to be the host; if there is no monitoring unit which used to be a host, any preference permission can be selected, for example, a monitoring unit with a small MAC address is used as the host; optionally, the host competition rule comprises one of the following rules or several following rules in a particular order:
judging whether a monitoring unit used to be the host, and the monitoring unit which used to be the host being preferable;
comparing the order of competing for the host by the monitoring units, and a monitoring unit which applies in the earliest or latest being preferable;
the host application message carrying a unique local identifier, and a monitoring unit with a minimum or maximum local identifier being preferable.

Of course, there can also be other host competition rules, and the present invention does not limit the rules.

In step 203, a monitoring unit which becomes the host after the competition is configured as the host and accepts registrations from the slaves; and the monitoring units which do not become the host after the competition are configured as the slaves and register with the host.

In step 103, when a monitoring unit acts as the host, the monitoring unit as the host performs system arbitration on preliminary management results reported by the slaves and a preliminary management result of the local monitoring unit to obtain an arbitration result, and transmits the arbitration result to the slaves.

The preliminary management results needed to be uniformed or synchronized by the system comprise battery expected states, and a system arbitration module performing the system arbitration according to the obtained preliminary management results comprises: using the last battery expected state as the system arbitration result; or
the preliminary management results needed to be uniformed or synchronized by the system comprise voltage values expected to be output by rectifiers, and a system arbitration module performing the system arbitration according to the obtained preliminary management results comprises: determining the system arbitration result according to a principle "taking the minimum value from all data" for a charge voltage and according to a principle "taking the maximum value from all data" for a discharge voltage; or
the preliminary management results needed to be uniformed or synchronized by the system comprise current values expected to be output by rectifiers, and a system arbitration module performing the system arbitration according to the obtained preliminary management results comprises: determining the system arbitration result using a principle of current-equalize or proportional current-equalize.

It should be illustrated that, the preliminary management results needed to be uniformed or synchronized by the system are not limited to the above three parameters, and the arbitration rule can also be set flexibly, which is not limited by the above description.

In step 104, the monitoring unit as the host and the monitoring units as the slaves perform reloading according to the arbitration result.

The host broadcasts the arbitration result to all the slaves; each slave reloads the result as a final result of the battery management, controls and outputs the result to the rectifier, and completes migration and management of the control state of the battery management.

In the method according to one aspect, all services of each parallel power source run independently, and there is no need to coordinate with each other and custom modification due to different scenarios or user requirements, which reduces the coupling and interference between programs; the output of the battery management of each monitoring unit is reloaded; and the host of the monitoring units is obtained by competition, performs arbitration according to the states of all the monitoring units to reload output results of the battery management of all the monitoring units, so as to perform uniform battery management. In addition, the slave may take over the host to improve the reliability.

One application example will be described in combination with accompanying drawings hereinafter.

It is assumed that, in power source products of a certain company, the main single-stand base station power source is a power source device configured with 16 rectifiers of specification 48V/50A and a total capacity of 800A. Now, a certain telecommunication operator wishes to be able to provide a base station power source with a capacity of 3000A, and thus, it needs to support four racks to supply power in parallel.

For such an application scenario, the specific implementation will be described in detail hereinafter.

In step one, various base station power sources and monitoring units are physically connected in parallel, and the specific steps are as follows:
each base station power source completes separately alternating current power supply access, rectifier configuration, connecting load at positive and negative rows, batteries, etc.; each power source configures respective monitoring unit, each monitoring unit is only responsible for monitoring and management of the local power source device; and each monitoring unit has an Ethernet interface for connecting with the background network management center;
the positive and negative rows of all the power sources are interconnected, and the monitoring units are interconnected through the Ethernet interface; and the Ethernet interface connected with the background network management center can be multiplexed.

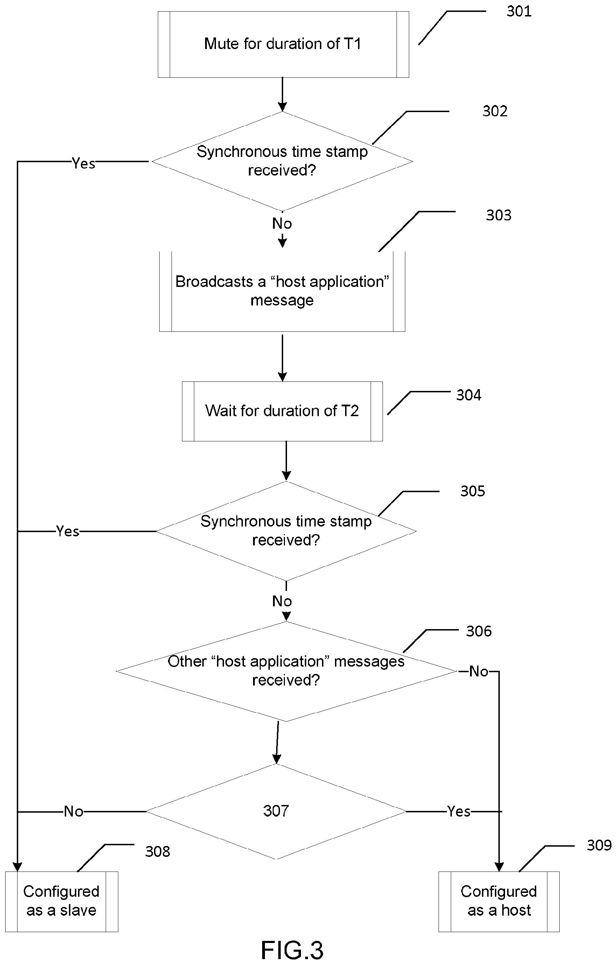

In step two, the host competition is performed. Specifically, as shown in FIG. 3, the steps are as follows.

In step 301, after being powered on, the monitoring unit is first mute for duration of T1 (such as 15 seconds);

This period of mute time can ensure that the system runs stably and completes one battery management.

In step 302, it is judged whether a synchronous time stamp in the network is received, i.e., judged whether there is a host in operation, if there is a host, step 308 is executed; otherwise, step 303 is executed.

It listens for whether there is a host monitoring unit in operation in the Ethernet; the host monitoring unit with an arbitration right will transmit one synchronous time stamp message every 1 second.

In step 303, the monitoring unit broadcasts and transmits a "host application" message, to apply for becoming a host.

The message includes a unique identifier such as an ID or a MAC address, etc., of the local monitoring unit and information of whether this monitoring unit used to be a host at the last time, etc.; in the present example, the MAC address is used as the unique identifier, because there must be a MAC address if communication is to be done through the Ethernet, and this address is unique, thus there is no need to use an additional ID as an identifier.

In step 304, after transmitting the "host application" message, the monitoring unit is mute for duration of T2 (for example, 3 seconds) again.

In step 305, it is judged whether the synchronous time stamp in the network is received, i.e., whether a synchronous time stamp message transmitted by a host, if it is received, step 308 is executed; otherwise, step 306 is executed.

In step 306, it is judged whether other "host application" messages are received, i.e., it is listened for that whether there are other monitoring units which are applying for being a host at the same time in the Ethernet, if there is/are, step 307 is executed; otherwise, step 309 is executed.

In step 307, it is judged of a state of transmitting the "host application" message is determined, if the local device is the device which applied for being the host at latest in the monitoring units used to be the host (including the situation that the local monitoring unit is the only one which used to be the host) or all the applicants were not the host, as well as the MAC address of the local device is minimum, step 308 is executed; otherwise, 309 is executed.

Firstly, it is viewed whether only this monitoring unit used to be the host, if yes, this monitoring unit continues to act as the host, and other monitoring units act as slaves; if there are multiple monitoring units which used to be hosts (for example, the multiple monitoring units which were hosts in other power source devices, are moved into a new parallel power source to act as a variety of host monitoring unit or slave monitoring units), then the time for being the host after competition is compared, and the monitoring unit with latest time acts as the host, and other monitoring units act as slaves; if all these monitoring units were not hosts, the MAC addresses are compared directly, an monitoring unit with the smallest MAC address acts as the host, and other monitoring units act as slaves. After transmitting the "host application" message for 3 seconds, the new host starts to transmit the synchronous time stamp message.

In step 308, the monitoring unit itself is configured as a slave, receives the synchronous time stamp transmitted by the host, and after receiving the synchronous time stamp message or receiving a broadcast notification for the first time, registers with the host.

In step 309, the monitoring unit itself is configured as the host, and broadcasts a notification, receives registration from other slaves, and starts to transmit the synchronous time stamp message.

If the monitoring unit becomes the host, it will have an arbitration right, and must broadcast and transmit one synchronous time stamp message every 1 second; if the monitoring unit becomes a slave, it receives the time stamp message transmitted by the host regularly, and synchronizes the clock of the local device.

When the host fails or needs to exit, the host can initiate one broadcast message of exiting the host state on its own, and notify other slaves to compete for being the host; or when the host occurs accidents such as being powered down, failure, etc., other slaves start to compete for being the host again, if they do not receive the synchronous time stamp message transmitted by the host for continuous 15 seconds (which is consistent with the mute time to ensure that the host can still compete for being the host again after being reset accidently). The above steps 303 to 309 are repeated.

For example, in the present scenario, the MAC address of a 1# monitoring unit is 00-00-00-00-00-01, the MAC address of a 2# monitoring unit is 00-00-00-00-00-02, the MAC address of a 3# monitoring unit is 00-00-00-00-00-03, the MAC address of a 4# monitoring unit is 00-00-00-00-00-04, and all the monitoring units did not act as hosts. After being mute for 15 seconds, they start to transmit the "host application" messages; the 1# monitoring unit, after transmitting the message, receives messages transmitted by other 3 monitoring units within 3 seconds; after competing according to the above rule, the 1# monitoring unit becomes the host, and transmits a synchronous time stamp message after 3 seconds; and after competing according to the above rule, other 3 monitoring units configure themselves as slaves, and register with the host after receiving the synchronous time stamp message for the first time.

For the time synchronization, the host broadcasts and transmits one synchronous time stamp message every 1 second; all slaves perform time synchronization accordingly. When the time of a certain slave is considered to be changed or a network manager changes the time, the slave immediately transmits the updated time to the host, and then the host broadcasts it to all the slaves in the next time stamp message, to implement time synchronization update for all the monitoring units. In the present scenario, the time of the #2 slave is changed to 2011-04-18 18:00:00 manually, the 2# slave delivers the time to the 1# host, the 1# host will include the changed time in the synchronous time stamp message and then transmits the message to all the slaves, so as to update the time of 1#, 2#, 3# and 4# to 2011-04-18 18:00:00 uniformly, to implement change of time on any monitoring unit instead of certainly on the host.

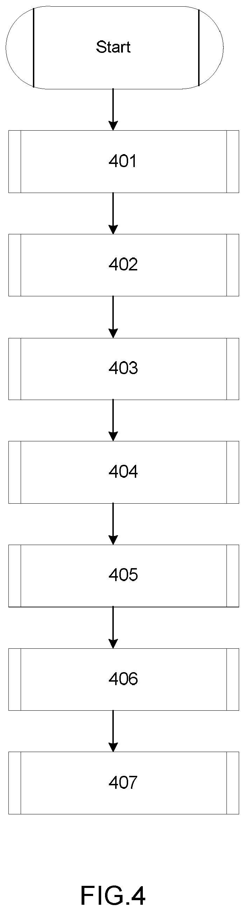

In step three, the host performs the arbitration to implement parallel monitoring of the base station power sources. As shown in FIG. 4, the specific steps are as follows.

In step 401, 1#, 2#, 3#, 4# monitoring units operate respective service software, to complete functions such as data acquisition, alarm determination, record storage, menu display, control and field bus communication, etc.

In step 402, 1#, 2#, 3#, 4# monitoring units independently complete background communication with the network management center through the Etherne.

Each monitoring unit (including the host and each slave) completes background communication with the network management center through the Ethernet independently. Therefore, each monitoring unit needs to configure a respective IP address, etc., but the protocol contents and mechanisms with the network management center maintain unchanged; and there is no need to perform operations such as packing, unpacking, etc., by the monitoring host; this largely reduces the complexity of software modification.

In step 403, 1#, 2#, 3#, 4# monitoring units perform normal operation and calculation according to the original battery management strategy and procedure.

In step 404, slaves of 2#, 3#, 4#, etc., transmit the battery management results needed to be uniformed or synchronized by the system to the 1# host every duration of T3.

It should be noted that, because the battery management module needs performing the reloading, the results or actions obtained by the battery management operation and calculation of 2#, 3#, 4#, etc., slaves monitoring units, are only stored temporarily and cannot immediately control the output. The results or actions obtained by its own battery management operation and calculation, in particular, expected battery management state (float charging, equalized charging, testing state), as well as expected output voltage value (after the temperature compensation) and current value output by the rectifier, etc., are transmitted to the host every duration of T3 (such as 1 second). If it is expected to turn to the periodic equalized charging, an equalized charging voltage to be output after the temperature compensation is expected as 56.0V, etc. If the types of various power source devices (rectifiers) are different, generally, the expected output voltage value and the range of the current-equalize value are also transmitted to the host; other battery management results can be output directly, for example, personalized results or actions needed not to be uniformed or synchronized by the network, such as capacity estimation, alarm determination, power down control, etc.

In step 405, the 1# host performs the arbitration of battery management on the data of the results obtained by battery management operation and calculation of all the slaves and the host itself every duration of T4 (such as 3 seconds) (to ensure that all the data transmitted by the slaves are received).

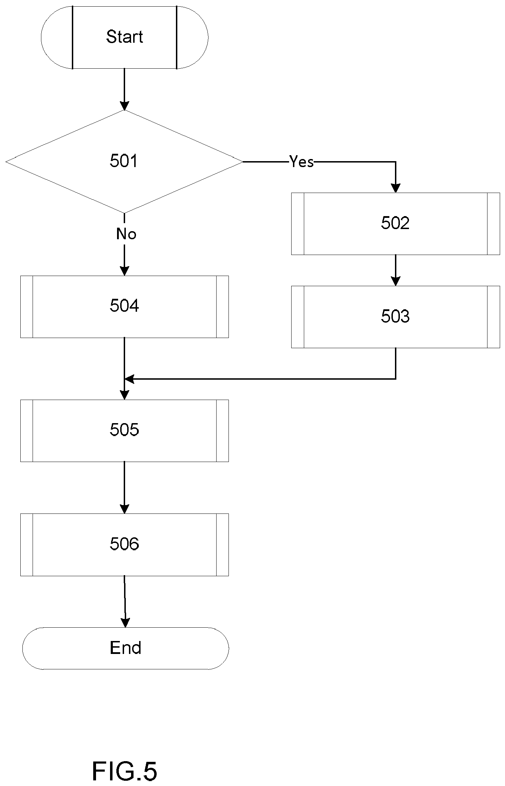

The monitoring host regularly processes the data of the results obtained by battery management operation and calculation of all slaves and the host itself, to perform the arbitration of battery management. The arbitration strategy is as follows: controlling the transition of the state (switch of three states such as float charging, equalized charging, testing), and the state being subject to the latest changed control state; the value of the voltage expected to be output by the rectifier, which is appropriate to be decided by itself according to the actual requirement, in which, generally, a principle of "taking the minimum value from all data" can be used; the current value expected to be output by the rectifier, which is appropriate to be decided by itself according to the actual requirement, in which, generally, a principle of current-equalize or proportional current-equalize (different rectifiers) can be used. As shown in FIG. 5, the arbitration process is as follows:
in step 501, it is judged whether there is a change of the control state within a duration of T4, and if there is a change of the control state, step 502 is executed; otherwise, step 504 is executed;
in step 502, a control state which is received in the latest and has a change within this time period is extracted;
in step 503, this state is set as an arbitrated control state, and proceed to perform step 505;
in step 504, the original control state continues to be the arbitrated control state;
in step 505, according to the control state, outputting a charge voltage is arbitrated by the principle of "taking the minimum value from all data"; and outputting a discharge voltage is arbitrated by the principle of "taking the maximum value from all data";
in step 506, according to the principle of "current-equalize or proportional current-equalize", the output current is arbitrated.

The configuration in the present scenario is used as an example.

For battery expected state (switching of the three states of float charging, equalized charging, testing), it is subject to the last changed control state.

For example, the current battery control state is float charging, the period of the equalized charging of 1# host is 90 days, the period of the equalized charging of 2# slave is 120 days, and the period of the equalized charging of 3# and 4# slaves is 180 days; when the 1# host determines that the time for the periodic equalized charging is over, the expected state of the battery management is set as the equalized charging, but the expected states submitted by the 2#, 3# and 4# are still the float charging, so, after arbitration by the host, the final state is set as the equalized charging and is issued to the slaves through a broadcast command, and then all parallel systems enter into equalized charging, which is equivalent to the period of the equalized charging of the entire parallel system being 90 days. If the battery management state on 2# slave is changed to the float charging manually, but the expected states of 1#, 3# and 4# are still the equalized charging, so, the host receives the expected state of 2# being float charging, and after arbitration, the host sets the final state as the float charging, and issues the state through a broadcast command. The change of the battery control state can be implemented on any device, instead of certainly on the host.

As another example, the current battery control status is the float charging, and it is assumed that, within a recent T4 period, the expected state submitted by 1# slave and received by the host at 0.4 second is the float charging; the expected state submitted by 2# slave and received by the host at 0.9 second is the equalized charging; the expected state submitted by 3# slave and received by the host at 1.4 second is the testing; the expected state submitted by 4# slave and received by the host at 1.6 second is the float charging; and the expected state of the battery management of the host itself determined by the host at 1.8 second is the float charging. Thus, according to the arbitration rule, it is subject to "the expected state submitted by 3# slave and received by the host at 1.4 second being of the testing". The final control state obtained by the host is the testing.

For the transition of the control state of the rectifier (on and off, sleep, awakening), each monitoring unit can control the state of the rectifier by itself according to the management result, and does not need to be arbitrated through the host. For example, the background network management controls No. 5 rectifier of 2# slave to be closed, and the 2# slave can control whether to close the No. 5 rectifier according to the actual situation.

The voltage value expected to be output by the rectifier is appropriate to be decided by the rectifier itself according to the actual requirement. Firstly, different principles are adopted according to the final control state. Usually, the principle of "taking the minimum value from all data" can be used for a charge voltage and the principle of "taking the maximum value from all data" is used for a discharge voltage; this is for the purpose that the battery is protected from not being charged or discharged excessively.

For example, if the final control state obtained by the host is the float charging state; the expected float charging voltage submitted by 1# slave is 53.7V; the expected float charging voltage submitted by 2# slave is 54.0V; the expected float charging voltage submitted by 3# slave is 53.1V; the expected float charging voltage submitted by 4# slave is 53.5V; and the expected float charging voltage of the battery management of the host itself is 53.7V. According to the principle of "taking the minimum value from all data", the final float charging voltage arbitrated by the host is 53.1V.

For another example, the expected float charging voltage of 1# is 52.5V, the expected float charging voltage of 2# is 52.6V, the expected float charging voltage of 3# is 52.4V, the expected float charging voltage of 2# is 52.7V; after arbitration by the host, the final float charging voltage is 52.4V, and is issued to the slaves through a broadcast command. If the float charging voltage of 1# is changed to 53V manually, and the float charging voltages of 2#, 3#, 4# are not changed; after arbitration by the host, the float charging remains 52.4V, and the change does not take effect. The arbitration method for the equalized charging voltage is the same as above described.

The current value expected to be output by the rectifier is appropriate to be decided by its own according to the actual requirement. Generally, a principle of current-equalize or proportional current-equalize (different rectifiers) can be used.

For example, the expected current value which is submitted by 1# slave is 13.7A; the expected current value which is submitted by 2# slave is 15.3A; the expected current value which is submitted by 3# slave is 12.7A; the expected current value which is submitted by 4# slave is 25.0A; and the expected current value of the battery management of the host itself is 12.5A. A final current value which is calculated and obtained by the host is 13.5A according to the number of the rectifiers configured on each device.

If rectifiers with the same type are used, an algorithm of current-equalize can be used, i.e., the calculated expected current limit value and the number of the configured rectifiers are submitted by the slave directly, and after arbitration by the host, the host issues the final current limit value to the slave; and, if the rectifiers with different types are used, the slave needs to submit the model number of the rectifier, the expected current limit value and the number of the rectifiers, and after arbitration by the host, the host issues a proportional number after the arbitration to the slave, and the slave then converts the proportional number to an actual current limit value. The expected current limit value of 1# is 25A and the number of rectifiers is 5, for, the expected current limit value of 2# is 20A and the number of rectifiers is 6, the expected current limit value of 3# is 30A and the number of rectifiers is 5, the expected current limit value of 4# is 25A and the number of rectifiers is 10; and, the host calculates the current limit value according to the following equation: (25*5+20*6+30*5+25*10) / (5+6+5+10) = 22A, the final current limit value after the arbitration is 22A, and the host issues it to the slave through a broadcast command.

In step 406, the 1# host broadcasts the arbitration result to all the slaves, and each slave reloads the result as the final result of the battery management, and controls and outputs the result to the rectifiers.

In step 407, the slaves such as 2#, 3#, 4#, etc., perform the battery management actions, and complete the transition and management of the control state of the battery management.

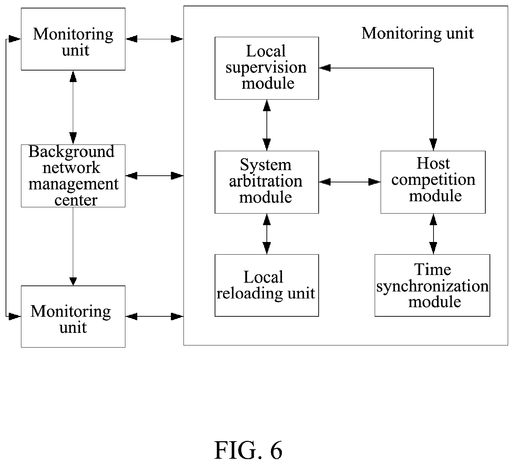

The steps 401 to 407 are repeated circularly, and the parallel monitoring by way of host arbitration of the battery management is completed.
in order to implement the above method, one aspect further provides a system for communication base station power sources, and the system comprises a plurality of base station power sources which are connected in parallel; and as shown in FIG. 6, a monitoring unit of each base station power source is interconnected with monitoring units of other base station power sources and is connected with a background network management center, wherein, the monitoring unit comprises:
a local supervision module, configured to monitor and manage a local power source device and further configured to transmit a preliminary management result needed to be uniformed or synchronized by the system to a host to apply for arbitration when the local device is a slave;
a system arbitration module, configured to, when the local monitoring unit is a host, perform system arbitration on the preliminary management result reported by the slave and a preliminary management result of the local device to obtain an arbitration result, and transmit the arbitration result to the slave; and
a local reloading unit, configured to perform reloading according to the arbitration result.

A host state or a slave state of the monitoring unit can be preset by the system.

Preferably, the monitoring unit further comprises a host competition module, which is configured to: broadcast a host application message and/or receive host application messages from other monitoring units, and compete for being the host according to the host application message(s) and a preset host competition rule; when the local monitoring unit becomes the host after the competition, configure the local monitoring unit as the host and accept registration from the slave(s), and when the local monitoring unit does not become the host after the competition, configure the local monitoring unit as the slave and register with a host.

The host competition module is configured to broadcast the host application message when it does not listen for the host or receives a broadcast message that the host exits.

In order to implement time synchronization, the monitoring unit further comprises: a time synchronization module, configured to when the local device is the host, periodically broadcast a time stamp message to the slave(s), when the local device is the slave, receive the time stamp message transmitted by the host, and perform time synchronization according to the received time stamp message; and the host competition module is further configured to listen for the host according to the time stamp message.

Optionally, the host competition rule comprises one of or several items as follows in a particular order:
judging whether each monitoring unit used to be the host, and the monitoring unit which used to be the host being preferable;
comparing the order of competing for being the host applied by each monitoring unit, a monitoring unit which applies in the earliest or latest being preferable;
the host application message carrying an unique local identifier, a monitoring unit with a minimum or maximum local identifier being preferable.

Specifically, the preliminary management results needed to be uniformed or synchronized by the system comprises battery expected states, and the system arbitration module performing the system arbitration according to the obtained preliminary management results comprises: using a last battery expected state as the system arbitration result; or
the preliminary management results needed to be uniformed or synchronized by the system comprises voltage values expected to be output by rectifiers, and the system arbitration module performing the system arbitration according to the obtained preliminary management results comprises: determining the system arbitration result according to a principle of "taking the minimum value from all data" for a charge voltage and a principle of "taking the maximum value from all data" for a discharge voltage; or
the preliminary management results needed to be uniformed or synchronized by the system comprises current values expected to be output by rectifiers, and the system arbitration module performing the system arbitration according to the obtained preliminary management results comprises: determining the system arbitration result according to a principle of current-equalize or proportional current-equalize.

The present disclosure further provides a system for monitoring communication base station power sources, which comprises a plurality of monitoring units as described above.

In conclusion, the schemes of the present disclosure thoroughly solve that various difficulties and disadvantages occur when the power supply with extended capacity is implemented by multi-machine parallel control of the single-stand base station power sources, and overcome technical difficulties about the cooperation operation between the service software in parallel monitoring (especially, battery management), and a sharp rise in the software complexity and reduction in reliability which are brought by networking of the background network management center; which can be implemented by slightly modifying the software of the monitoring unit, and the flow thereof is simple and reliable, and can provide a low cost, high reliable, easy to implement and practical parallel control scheme for realizing the power supply with the extended capacity.

Compared with the existing technology, the present disclosure has the following beneficial effects:
(1) it supports that the host and slave power source devices may be not the same device to perform parallel monitoring; the extension performance is very good, and the extension can be arbitrary;
(2) configurations, parameters and control strategies of the host and slave power source monitoring units may be not the same; the parameters do not need to be synchronized; and respective service feature and operation mode are maintained;
(3) there is not a large amount of data interaction between the host and slave monitoring units, and the communication protocols and mechanisms between the monitoring units and the background network management remain unchanged;
(4) when the host fails, the slave is ensured to apply for becoming a new host in the mechanism; at the same time, the communication between various slaves and the background network management is not influenced;
(5) for the user, he does not concern which device is a host and which device is a slave; it can be seen on the user interface that various independent power source devices can interwork with each other very well. Correct responses can be obtained when the modification of the parameters or switching of the control states are performed on any device monitoring unit. For example, the float charging voltage, equalized charging period can be modified on a certain slave, and as long as the arbitration is effective, the modification can be implemented as the user wishes. For the time modification on any one device, all devices can complete the time synchronization, rather than that on certain parallel power sources, the parameter modification and control are effective only when being performed on the host.
(6) the software of the monitoring units of the existing power sources only need to be simply modified and is added with the host competition and arbitration and reloading of the battery management module, so as to achieve the purpose of parallel monitoring finally.

A person having ordinary skill in the art can understand that all or a part of steps in the above method can be implemented by programs instructing related hardware, and the programs can be stored in a computer readable storage medium, such as a read-only memory, a magnetic disk or an optical disc, etc. Alternatively, all or a part of steps in the above embodiments can also be implemented by one or more integrated circuits. Accordingly, each module/unit in the above embodiments can be implemented in a form of hardware, and can also be implemented in a form of software functional module. The present invention is not limited to a combination of any particular form of hardware and software.

### Industrial Applicability

The disclosed method and system implement battery management through the arbitration mechanism of the host monitoring unit according to the existing application environment, so as to simply and conveniently implement parallel monitoring of multiple power source racks, provide great reliability, reduce the implementation cost to the maximum extent, and meet the needs of the telecommunication operators.

**FURTHER EXPLANATION OF DRAWINGS**

| **STEP** | |
|---|---|
| **Figure 1** | |
| 101 | Several base station power sources are connected in parallel, and a monitoring unit of each base station power source is interconnected with monitoring units of other base station power sources and is connected with a background network management center |
| 102 | Each monitoring unit monitors and manages the local power source device, and when the local is a slave, transmits a preliminary management result needed to be uniformed or synchronized by the system to a host to apply for arbitration |
| 103 | When a monitoring unit acts as the host, the monitoring unit as the host performs system arbitration on the preliminary management results reported by the slaves and a preliminary management result of the local to obtain an arbitration result, and transmits the arbitration result to the slaves |
| 104 | The monitoring unit as the host and the monitoring units as the slaves perform reloading according to the arbitration result |

| **Figure 2** | |
|---|---|
| 201 | Each monitoring unit broadcasts a host application message and/or receives host application messages from other monitoring units |
| 202 | Each monitoring unit competes for being the host according to the host application message(s) and a preset host competition rule |
| 203 | The monitoring unit which becomes the host after the |
| | competition is configured as the host and accepts registration from the slave; and the monitoring unit which does not become the host after the competition is configured as the slave and registers with the host |

| **Figure 3** | |
|---|---|
| 307 | The local is a device which applies in the latest in the monitoring units which used to be the host; or all the applicants were not the host, and the MAC address of the local is minimum |

| **Figure 4** | |
|---|---|
| 401 | Various monitoring units operate respective service software normally |
| 402 | Each monitoring unit independently completes communication with the network management center through the Ethernet |
| 403 | Each monitoring unit operates respective battery management software normally |
| 404 | All monitoring units transmit battery management results to the host every duration of T3 |
| 405 | The host processes all the battery management results every duration of T4 and arbitrates to obtain a final result |
| 406 | The host broadcasts the arbitration final result to the network, and all the monitors receive and reload the battery management results |
| 407 | All the monitoring units perform battery management actions (transition of the states, control the rectifiers, etc.) |

| **Figure 5** | |
|---|---|
| 501 | Whether there is a change of the control state within a duration of T4 |
| 502 | Extract the control state which is received in the latest and has a change within this time period |
| 503 | This state is set as a control state after the arbitration |
| 504 | The original control state continues to be the control state after the arbitration |
| 505 | According to the control state, the principle of "be low not high" is used to perform arbitration to output a charge voltage; and the principle of "be high not low" is used to perform arbitration to output a discharge voltage |
| 506 | According to the principle of "current-sharing or proportional current-charing", arbitration is performed to output the current |

## Claims

1. A method for parallel monitoring of base station power sources, the method comprising:
connecting a plurality of base station power sources in parallel, and interconnecting a monitoring unit of each base station power source with monitoring units of other base station power sources and connecting the monitoring unit with a network management device;
**characterized by**:
configuring one monitoring unit as host and the other monitoring units as slaves;
each monitoring unit monitoring and managing the base station power source to which the each monitoring unit belongs, and the slave monitoring units transmitting preliminary management results needed to be uniformed or synchronized by a system arbitration to the host monitoring unit to apply for arbitration;
the host monitoring unit performing system arbitration on the preliminary management results reported by the slave monitoring units and a preliminary management result of the host monitoring unit to obtain an arbitration result, and transmitting the arbitration result to the slave monitoring units; and
the host monitoring unit and the slave monitoring units performing reloading according to the arbitration result; wherein
the preliminary management results needed to be uniformed or synchronized by the system arbitration comprise battery expected states, and the step of performing system arbitration according to the obtained preliminary management results comprises: taking the last battery expected state as the system arbitration result; or
the preliminary management results needed to be uniformed or synchronized by the system arbitration comprise voltage values expected to be output by rectifiers, and the step of performing system arbitration according to the obtained preliminary management results comprises: determining the system arbitration result using a principle of "taking the minimum value from all data" for a charge voltage and using a principle of "taking the maximum value from all data" for a discharge voltage; or
the preliminary management results needed to be uniformed or synchronized by the system arbitration comprise current values expected to be output by rectifiers; and the step of performing system arbitration according to the obtained preliminary management results comprises: determining the system arbitration result using a principle of current-equalize or proportional current-equalize.

2. The method according to claim 1, wherein, a host state or a slave state of each monitoring unit is preset by the system, or is determined by each monitoring unit performing the following host competition steps:
each monitoring unit broadcasting a host application message and/or receiving host application messages from other monitoring units;
each monitoring unit competing for being the host monitoring unit according to the host application message(s) and a preset host competition rule;
a monitoring unit which becomes the host monitoring unit after the competition being configured as the host monitoring unit and accepting a registration from a slave monitoring unit; and a monitoring unit which does not become the host monitoring unit after the competition being configured as a slave monitoring unit and registering with the host monitoring unit.

3. The method according to claim 2, wherein, each monitoring unit broadcasts the host application message when it does not listen for the host monitoring unit or receives a broadcast message that the host monitoring unit exits.

4. The method according to claim 2, further comprising:
the monitoring unit as the host monitoring unit periodically broadcasting a time stamp message to the slave monitoring units, the monitoring unit as the slave monitoring unit receiving the time stamp message transmitted by the host monitoring unit, and performing time synchronization according to the received time stamp message; and each monitoring unit listening for the host monitoring unit according to the time stamp message.

5. The method according to claim 2, wherein, the step of each monitoring unit competing for being the host monitoring unit according to the host application message(s) and a preset host competition rule comprises:
judging whether each monitoring unit used to be a host monitoring unit, and the monitoring unit which used to be the host monitoring unit being preferable;
comparing an order of competing for being the host monitoring unit applied by various monitoring units, a monitoring unit which applies in the earliest or latest being preferable; or
the host application message carrying a local identifier, a monitoring unit with a minimum or maximum value of the local identifier being preferable.

6. A system for parallel monitoring of base station power sources, comprising: a plurality of interconnected monitoring units, each being configured to monitor respectively one of a plurality of base station power sources connected in parallel to which each monitoring unit belongs and being connected with a network management device; **characterized in that**, each monitoring unit comprises:
a supervision module, configured to monitor and manage the base station power source to which the monitoring unit belongs, and when the monitoring unit is configured as a slave monitoring unit, transmit a preliminary management result needed to be uniformed or synchronized by a system arbitration to another monitoring unit configured as a host monitoring unit to apply for arbitration;
an arbitration module, configured to, when the monitoring unit is configured as a host monitoring unit, perform system arbitration on the preliminary management result reported by the slave monitoring unit and a preliminary management result of the host monitoring unit to obtain an arbitration result, and transmit the arbitration result to the slave monitoring unit; and
a reloading unit, configured to perform reloading according to the arbitration result; wherein
the preliminary management results needed to be uniformed or synchronized by the system arbitration comprise battery expected states, and the system arbitration module is configured to perform system arbitration according to the obtained preliminary management results by the following way: taking the last battery expected state as the system arbitration result; or
the preliminary management results needed to be uniformed or synchronized by the system arbitration comprise voltage values expected to be output by rectifiers, and the system arbitration module is configured to perform system arbitration according to the obtained preliminary management results by the following way: determining the system arbitration result using a principle of "taking the minimum value from all data" for a charge voltage and using a principle of "taking the maximum value from all data" for a discharge voltage; or
the preliminary management results needed to be uniformed or synchronized by the arbitration comprise current values expected to be output by rectifiers; and the system arbitration module is configured to perform system arbitration according to the obtained preliminary management results by the following way: determining the system arbitration result using a principle of current-equalize or proportional current-equalize.

7. The system according to claim 6, wherein, a host state or a slave state of the monitoring unit is preset by the system, or the monitoring unit further comprises a host competition module, which is configured to: broadcast a host application message and/or receive host application messages from other monitoring units, and compete for being the host monitoring unit according to the host application message(s) and a preset host competition rule; when a monitoring unit becomes the host monitoring unit after the competition, configure the monitoring unit as the host monitoring unit and accept registration from the slave monitoring unit(s), and when a monitoring unit does not become the host monitoring unit after the competition, configure the monitoring unit as the slave monitoring unit and register with a host monitoring unit.

8. The system according to claim 7, wherein, the host competition module is configured to broadcast the host application message when it does not listen for the host monitoring unit or receives a broadcast message that the host monitoring unit exits.

9. The system according to claim 7, wherein, the monitoring unit further comprises: a time synchronization module, which is configured to when the monitoring unit is as the host monitoring unit, periodically broadcast a time stamp message to the slave monitoring unit, when the monitoring unit is the slave monitoring unit, receive the time stamp message transmitted by the host monitoring unit, and perform time synchronization according to the received time stamp message; and the host competition module is further configured to listen for the host monitoring unit according to the time stamp message.

10. The system according to claim 7, wherein, the host competition rule comprises one or more of the following:
a monitoring unit which used to be a host monitoring unit being preferable;
a monitoring unit which applies for competing for being the host monitoring unit in the earliest or latest being preferable;
a monitoring unit with a minimum or maximum value of the local identifier carried in the host application message being preferable.

## Patentansprüche

1. Verfahren zum parallelen Überwachen von Basisstationsstromquellen, wobei das Verfahren Folgendes umfasst:
paralleles Verbinden einer Vielzahl von Basisstationsstromquellen und Verbinden einer Überwachungseinheit jeder Basisstationsstromquelle mit Überwachungseinheiten anderer Basisstationsstromquellen und Verbinden der Überwachungseinheit mit einer Netzwerkverwaltungsvorrichtung;
**dadurch gekennzeichnet dass**:
eine einzelne Überwachungseinheit als Host und die anderen Überwachungseinheiten als Slaves konfiguriert werden; wobei jede Überwachungseinheit die Basisstationsstromquelle, zu der die jeweilige Überwachungseinheit gehört, überwacht und verwaltet und die Slave-Überwachungseinheiten vorläufige Verwaltungsergebnisse, die von einer Systemarbitrierung angepasst oder synchronisiert werden müssen, zu der Host-Überwachungseinheit senden, um eine Arbitrierung zu beantragen;
die Host-Überwachungseinheit eine Systemarbitrierung an den vorläufigen Verwaltungsergebnissen, die von den Slave-Überwachungseinheiten gemeldet werden, und an einem vorläufigen Verwaltungsergebnis der Host-Überwachungseinheit durchführt, um ein Arbitrierungsergebnis zu erhalten, und das Arbitrierungsergebnis an die Slave-Überwachungseinheiten sendet; und
die Host-Überwachungseinheit und die Slave-Überwachungseinheiten das Neuladen gemäß dem Arbitrierungsergebnis durchführen; wobei
die vorläufigen Verwaltungsergebnisse, die durch die Systemarbitrierung vereinheitlicht oder synchronisiert werden müssen, erwartete Batteriezustände umfassen und der Schritt des Durchführens einer Systemarbitrierung gemäß den erhaltenen vorläufigen Verwaltungsergebnissen Folgendes umfasst: Verwenden des letzten erwarteten Batteriezustands als Systemarbitrierungsergebnis; oder
die vorläufigen Verwaltungsergebnisse, die durch die Systemarbitrierung vereinheitlicht oder synchronisiert werden müssen, Spannungswerte umfassen, von denen erwartet wird, dass sie von Gleichrichtern ausgegeben werden, und der Schritt des Durchführens einer Systemarbitrierung gemäß den erhaltenen vorläufigen Verwaltungsergebnissen Folgendes umfasst: Bestimmen des Systemarbitrierungsergebnisses unter Verwendung eines Prinzips des "Verwendens des minimalen Wertes von allen Daten" für eine Ladespannung und unter Verwendung eines Prinzips des "Verwendens des maximalen Wertes von allen Daten" für eine Entladespannung; oder
die vorläufigen Verwaltungsergebnisse, die durch die Systemarbitrierung vereinheitlicht oder synchronisiert werden müssen, Stromwerte umfassen, von denen erwartet wird, dass sie von Gleichrichtern ausgegeben werden; und der Schritt des Durchführens einer Systemarbitrierung gemäß den erhaltenen vorläufigen Verwaltungsergebnissen Folgendes umfasst: Bestimmen des Systemarbitrierungsergebnisses unter Verwendung eines Prinzips der Stromentzerrung oder proportionaler Stromentzerrung.

2. Verfahren nach Anspruch 1, wobei ein Host-Zustand oder ein Slave-Zustand jeder Überwachungseinheit durch das System voreingestellt wird oder bestimmt wird, indem jede Überwachungseinheit die folgenden Host-Wettbewerbsschritte ausführt:
jede Überwachungseinheit sendet eine Host-Anwendungsnachricht und/oder empfängt Host-Anwendungsnachrichten von anderen Überwachungseinheiten;
jede Überwachungseinheit konkurriert um die Host-Überwachungseinheit gemäß der Host-Anwendungsnachricht(en) und einer voreingestellten Host-Wettbewerbsregel;
eine Überwachungseinheit, die nach dem Wettbewerb zur Host-Überwachungseinheit wird, wird als Host-Überwachungseinheit konfiguriert und nimmt eine Registrierung von einer Slave-Überwachungseinheit an; und eine Überwachungseinheit, die nach dem Wettbewerb nicht zur Host-Überwachungseinheit wird, wird als Slave-Überwachungseinheit konfiguriert und bei der Host-Überwachungseinheit registriert.

3. Verfahren nach Anspruch 2, wobei jede Überwachungseinheit die Host-Anwendungsnachricht sendet, wenn sie nicht auf die Host-Überwachungseinheit hört, oder eine Sendenachricht empfängt, dass die Host-Überwachungseinheit ausgeschaltet wird.

4. Verfahren nach Anspruch 2, das ferner Folgendes umfasst:
die Überwachungseinheit als Host-Überwachungseinheit, die periodisch eine Zeitstempelnachricht an die Slave-Überwachungseinheiten sendet, die Überwachungseinheit als Slave-Überwachungseinheit, die die Zeitstempelnachricht empfängt, die von der Host-Überwachungseinheit gesendet wurde, und eine Zeitsynchronisation gemäß der empfangenen Zeitstempelnachricht durchführt; und wobei jede Überwachungseinheit die Host-Überwachungseinheit gemäß der Zeitstempelnachricht überwacht.

5. Verfahren nach Anspruch 2, wobei der Schritt, dass jede Überwachungseinheit um die Host-Überwachungseinheit gemäß der Host-Anwendungsnachricht(en) und einer voreingestellten Host-Wettbewerbsregel konkurriert, Folgendes umfasst:
Beurteilen, ob jede Überwachungseinheit eine Host-Überwachungseinheit war und ob die Überwachungseinheit, die zuvor die Host-Überwachungseinheit war, vorzuziehen ist;
Vergleichen einer Reihenfolge des Konkurrierens um die Host-Überwachungseinheit, das von verschiedenen Überwachungseinheiten angewendet wird, wobei eine Überwachungseinheit, die am frühesten oder am spätesten zutrifft, vorzuziehen ist; oder
die Host-Anwendungsnachricht, die eine lokale Kennung trägt, wobei eine Überwachungseinheit mit einem minimalen oder maximalen Wert der lokalen Kennung vorzuziehen ist.

6. System zum parallelen Überwachen von Basisstationsstromquellen, wobei das System Folgendes umfasst: eine Vielzahl von miteinander verbundenen Überwachungseinheiten, von denen jede dafür konfiguriert ist, jeweils eine von mehreren parallel geschalteten Basisstationsstromquellen zu überwachen, zu denen jede Überwachungseinheit gehört und die mit einer Netzwerkverwaltungsvorrichtung verbunden sind; **dadurch gekennzeichnet, dass** jede Überwachungseinheit Folgendes umfasst:
ein Überwachungsmodul, das dafür konfiguriert ist, die Basisstationsstromquelle, zu der die Überwachungseinheit gehört, zu überwachen und zu verwalten, und wenn die Überwachungseinheit als Slave-Überwachungseinheit konfiguriert ist, Senden eines vorläufigen Verwaltungsergebnisses, das durch eine Systemarbitrierung vereinheitlicht oder synchronisiert werden muss, zu einer anderen Überwachungseinheit, die als Host-Überwachungseinheit konfiguriert ist, um eine Arbitrierung zu beantragen;
ein Arbitrierungsmodul, das dafür konfiguriert ist, wenn die Überwachungseinheit als Host-Überwachungseinheit konfiguriert ist, eine Systemarbitrierung an dem vorläufigen Verwaltungsergebnis, das von der Slave-Überwachungseinheit berichtet wird, und an einem vorläufigen Verwaltungsergebnis der Host-Überwachungseinheit durchzuführen, um ein Arbitrierungsergebnis zu erhalten, und Senden des Arbitrierungsergebnisses an die Slave-Überwachungseinheit; und
eine Nachladeeinheit, die so konfiguriert ist, dass sie das Nachladen gemäß dem Arbitrierungsergebnis durchführt; wobei die vorläufigen Verwaltungsergebnisse, die durch die Systemarbitrierung vereinheitlicht oder synchronisiert werden müssen, erwartete Batteriezustände umfassen und das Systemarbitrierungsmodul so konfiguriert ist, dass es eine Systemarbitrierung gemäß den erhaltenen vorläufigen Verwaltungsergebnissen auf folgende Weise durchführt: Verwenden des jüngsten erwarteten Batteriezustands als Systemarbitrierungsergebnis; oder
die vorläufigen Verwaltungsergebnisse, die durch die Systemarbitrierung vereinheitlicht oder synchronisiert werden müssen, umfassen Spannungswerte, von denen erwartet wird, dass sie von Gleichrichtern ausgegeben werden, und das Systemarbitrierungsmodul ist so konfiguriert, dass es eine Systemarbitrierung gemäß den erhaltenen vorläufigen Verwaltungsergebnissen auf folgende Weise durchführt: Bestimmen des Systemarbitrierungsergebnisses unter Verwendung eines Prinzips des "Verwendens des minimalen Wertes von allen Daten" für eine Ladespannung und unter Verwendung eines Prinzips des "Verwendens des maximalen Wertes von allen Daten" für eine Entladespannung; oder
die vorläufigen Verwaltungsergebnisse, die durch die Arbitrierung vereinheitlicht oder synchronisiert werden müssen, Stromwerte umfassen, von denen erwartet wird, dass sie von Gleichrichtern ausgegeben werden; und das Systemarbitrierungsmodul ist so konfiguriert, dass es eine Systemarbitrierung gemäß den erhaltenen vorläufigen Verwaltungsergebnissen auf folgende Weise durchführt: Bestimmen des Systemarbitrierungsergebnisses unter Verwendung eines Prinzips von Stromentzerrung oder proportionaler Stromentzerrung.

7. System nach Anspruch 6, wobei ein Host-Zustand oder ein Slave-Zustand der Überwachungseinheit durch das System voreingestellt wird oder die Überwachungseinheit ferner ein Host-Wettbewerbsmodul umfasst, das für Folgendes konfiguriert ist: Senden einer Host-Anwendungsnachricht und/oder Empfangen von Host-Anwendungsnachrichten von anderen Überwachungseinheiten, und Konkurrieren um die Host-Überwachungseinheit gemäß der Host-Anwendungsnachricht(en) und einer voreingestellten Host-Wettbewerbsregel; wenn eine Überwachungseinheit nach dem Wettbewerb zur Host-Überwachungseinheit wird, Konfigurieren der Überwachungseinheit als Host-Überwachungseinheit und Akzeptieren der Registrierung von der/den Slave-Überwachungseinheit(en) und wenn eine Überwachungseinheit nach dem Wettbewerb nicht zur Host-Überwachungseinheit wird, Konfigurieren der Überwachungseinheit als Slave-Überwachungseinheit und Registrieren bei einer Host-Überwachungseinheit.

8. System nach Anspruch 7, wobei das Host-Wettbewerbsmodul dazu konfiguriert ist, die Host-Anwendungsnachricht zu senden, wenn es nicht auf die Host-Überwachungseinheit hört, oder eine Broadcast-Nachricht empfängt, dass die Host-Überwachungseinheit ausgeschaltet wird.

9. System nach Anspruch 7, wobei die Überwachungseinheit ferner Folgendes umfasst: ein Zeitsynchronisationsmodul, das dafür konfiguriert ist, wenn die Überwachungseinheit die Host-Überwachungseinheit ist, periodisch eine Zeitstempelnachricht an die Slave-Überwachungseinheit zu senden, wenn die Überwachungseinheit die Slave-Überwachungseinheit ist, die von der Host-Überwachungseinheit übermittelte Zeitstempelnachricht zu empfangen und die Zeitsynchronisation gemäß der empfangenen Zeitstempelnachricht durchzuführen; und wobei das Host-Wettbewerbsmodul ferner dafür konfiguriert ist, gemäß der Zeitstempelnachricht auf die Host-Überwachungseinheit zu hören.

10. System nach Anspruch 7, wobei die Host-Wettbewerbsregel eines oder mehrere von Folgendem umfasst:
eine Überwachungseinheit, die zuvor eine Host-Überwachungseinheit war, ist vorzuziehen;
eine Überwachungseinheit, die sich als erstes oder letztes um den Wettbewerb als Host-Überwachungseinheit bewirbt, ist vorzuziehen;
eine Überwachungseinheit mit einem minimalen oder maximalen Wert der lokalen Kennung, die in der Host-Anwendungsnachricht getragen wird, ist vorzuziehen.

## Revendications

1. Procédé de surveillance parallèle de sources d'alimentation de station de base, le procédé consistant à :
connecter une pluralité de sources d'alimentation de station de base en parallèle, et interconnecter une unité de surveillance de chaque source d'alimentation de station de base à des unités de surveillance d'autres sources d'alimentation de station de base et connecter l'unité de surveillance à un dispositif de gestion de réseau ;
le procédé étant **caractérisé par** les étapes consistant à :
configurer une unité de surveillance en tant qu'hôte et les autres unités de surveillance en tant qu'esclaves ;
surveiller et gérer, par chaque unité de surveillance, la source d'alimentation de station de base à laquelle chaque unité de surveillance appartient, et transmettre, par les unités de surveillance esclaves, des résultats de gestion préliminaires devant être uniformisés ou synchronisés par un arbitrage de système avec l'unité de surveillance hôte pour solliciter un arbitrage ;
réaliser, par l'unité de surveillance hôte, un arbitrage de système sur les résultats de gestion préliminaires signalés par les unités de surveillance esclaves et sur un résultat de gestion préliminaire de l'unité de surveillance hôte afin d'obtenir un résultat d'arbitrage, et transmettre le résultat d'arbitrage aux unités de surveillance esclaves ; et
réaliser, par l'unité de surveillance hôte et les unités de surveillance esclaves, un rechargement selon le résultat d'arbitrage ; et dans lequel
les résultats de gestion préliminaires devant être uniformisés ou synchronisés par l'arbitrage de système comprennent des états attendus de batterie, et l'étape de réalisation d'un arbitrage de système selon les résultats de gestion préliminaires obtenus consiste à : prendre le dernier état attendu de batterie en tant que résultat d'arbitrage de système ; ou
les résultats de gestion préliminaires devant être uniformisés ou synchronisés par l'arbitrage de système comprennent des valeurs de tension attendues en sortie de redresseurs, et l'étape de réalisation d'un arbitrage de système selon les résultats de gestion préliminaires obtenus consiste à : déterminer le résultat d'arbitrage de système au moyen d'un principe de « sélection de la valeur minimale parmi toutes les données » pour une tension de charge, et au moyen d'un principe de « sélection de la valeur maximale parmi toutes les données » pour une tension de décharge ; ou
les résultats de gestion préliminaires devant être uniformisés ou synchronisés par l'arbitrage de système comprennent des valeurs de courant attendues en sortie de redresseurs, et l'étape de réalisation d'un arbitrage de système selon les résultats de gestion préliminaires obtenus consiste à : déterminer le résultat d'arbitrage de système au moyen d'un principe d'égalisation de courant ou d'égalisation proportionnelle de courant.

2. Procédé selon la revendication 1, dans lequel un état hôte ou un état esclave de chaque unité de surveillance est prédéfini par le système, ou est déterminé par chaque unité de surveillance réalisant les étapes suivantes de concours d'hôte consistant à :
par chaque unité de surveillance, diffuser un message de candidature d'hôte et/ou recevoir des messages de candidature d'hôte en provenance d'autres unités de surveillance ;
par chaque unité de surveillance, concourir pour être l'unité de surveillance hôte selon le ou les messages de candidature d'hôte et une règle de concours d'hôte prédéfinie ;
par une unité de surveillance qui devient l'unité de surveillance hôte après le concours, être configurée en tant qu'unité de surveillance hôte et accepter un enregistrement d'une unité de surveillance esclave ; et par une unité de surveillance qui ne devient pas l'unité de surveillance hôte après le concours, être configurée en tant qu'unité de surveillance esclave et s'enregistrer auprès de l'unité de surveillance hôte.

3. Procédé selon la revendication 2, dans lequel chaque unité de surveillance diffuse le message de candidature d'hôte quand elle n'écoute pas l'unité de surveillance hôte, ou reçoit un message de diffusion indiquant que l'unité de surveillance hôte existe.

4. Procédé selon la revendication 2, consistant en outre à :
par l'unité de surveillance en tant qu'unité de surveillance hôte, diffuser périodiquement un message d'horodatage aux unités de surveillance esclaves, et par l'unité de surveillance en tant qu'unité de surveillance esclave, recevoir le message d'horodatage transmis par l'unité de surveillance hôte, et réaliser une synchronisation horaire selon le message d'horodatage reçu ; et par chaque unité de surveillance, écouter l'unité de surveillance hôte selon le message d'horodatage.

5. Procédé selon la revendication 2, dans lequel l'étape consistant, par chaque unité de surveillance, à concourir pour être l'unité de surveillance hôte selon le ou les messages de candidature d'hôte et une règle de concours d'hôte prédéfinie consiste à :
juger si chaque unité de surveillance avait l'habitude d'être une unité de surveillance hôte, l'unité de surveillance qui avait l'habitude d'être l'unité de surveillance hôte étant préférable ;
comparer un ordre de concours pour être l'unité de surveillance hôte appliqué par diverses unités de surveillance, une unité de surveillance concourant en premier ou en dernier étant préférable ; ou
par le message de candidature d'hôte, transporter un identifiant local, une unité de surveillance avec une valeur minimale ou maximale de l'identifiant local étant préférable.

6. Système de surveillance parallèle de sources d'alimentation de station de base, le système comprenant :
une pluralité d'unités de surveillance interconnectées, chacune d'elles étant configurée pour surveiller respectivement une source parmi une pluralité de sources d'alimentation de station de base connectées en parallèle auxquelles appartient chaque unité de surveillance, et chacune d'elles étant connectée à un dispositif de gestion de réseau ;
le système étant **caractérisé en ce que** chaque unité de surveillance comprend :
un module de supervision, conçu pour surveiller et gérer la source d'alimentation de station de base à laquelle l'unité de surveillance appartient, et quand l'unité de surveillance est configurée en tant qu'unité de surveillance esclave, transmettre un résultat de gestion préliminaire devant être uniformisé ou synchronisé par un arbitrage de système avec une autre unité de surveillance configurée en tant qu'unité de surveillance hôte pour solliciter un arbitrage ;
un module d'arbitrage, conçu pour, quand l'unité de surveillance est configurée en tant qu'unité de surveillance hôte, réaliser un arbitrage de système sur le résultat de gestion préliminaire signalé par l'unité de surveillance esclave et sur un résultat de gestion préliminaire de l'unité de surveillance hôte afin d'obtenir un résultat d'arbitrage, et transmettre le résultat d'arbitrage à l'unité de surveillance esclave ; et
une unité de rechargement, conçue pour réaliser un rechargement selon le résultat d'arbitrage ; les résultats de gestion préliminaires devant être uniformisés ou synchronisés par l'arbitrage de système comprenant des états attendus de batterie, et le module d'arbitrage de système étant conçu pour réaliser un arbitrage de système selon les résultats de gestion préliminaires obtenus de la façon suivante : prendre le dernier état attendu de batterie en tant que résultat d'arbitrage de système ; ou
les résultats de gestion préliminaires devant être uniformisés ou synchronisés par l'arbitrage de système comprenant des valeurs de tension attendues en sortie de redresseurs, et le module d'arbitrage de système étant conçu pour réaliser un arbitrage de système selon les résultats de gestion préliminaires obtenus de la façon suivante : déterminer le résultat d'arbitrage de système au moyen d'un principe de « sélection de la valeur minimale parmi toutes les données » pour une tension de charge, et au moyen d'un principe de « sélection de la valeur maximale parmi toutes les données » pour une tension de décharge ; ou
les résultats de gestion préliminaires devant être uniformisés ou synchronisés par l'arbitrage comprenant des valeurs de courant attendues en sortie de redresseurs, et le module d'arbitrage de système étant conçu pour réaliser un arbitrage de système selon les résultats de gestion préliminaires obtenus de la façon suivante : déterminer le résultat d'arbitrage de système au moyen d'un principe d'égalisation de courant ou d'égalisation proportionnelle de courant.

7. Système selon la revendication 6, dans lequel un état hôte ou un état esclave de l'unité de surveillance est prédéfini par le système, ou dans lequel l'unité de surveillance comprend en outre un module de concours d'hôte conçu pour : diffuser un message de candidature d'hôte et/ou recevoir des messages de candidature d'hôte en provenance d'autres unités de surveillance, et concourir pour être l'unité de surveillance hôte selon le ou les messages de candidature d'hôte et une règle de concours d'hôte prédéfinie ; quand une unité de surveillance devient l'unité de surveillance hôte après le concours, configurer l'unité de surveillance en tant qu'unité de surveillance hôte et accepter l'enregistrement de la ou des unités de surveillance esclaves, et quand une unité de surveillance ne devient pas l'unité de surveillance hôte après le concours, configurer l'unité de surveillance en tant qu'unité de surveillance esclave et l'enregistrer auprès d'une unité de surveillance hôte.

8. Système selon la revendication 7, dans lequel le module de concours d'hôte est conçu pour diffuser le message de candidature d'hôte quand il n'écoute pas l'unité de surveillance hôte, ou reçoit un message de diffusion indiquant que l'unité de surveillance hôte existe.

9. Système selon la revendication 7, dans lequel l'unité de surveillance comprend en outre : un module de synchronisation horaire, conçu pour, quand l'unité de surveillance est configurée en tant qu'unité de surveillance hôte, diffuser périodiquement un message d'horodatage à l'unité de surveillance esclaves, quand l'unité de surveillance est l'unité de surveillance esclave, recevoir le message d'horodatage transmis par l'unité de surveillance hôte, et réaliser une synchronisation horaire selon le message d'horodatage reçu ; et dans lequel le module de concours d'hôte est en outre conçu pour écouter l'unité de surveillance hôte selon le message d'horodatage.

10. Système selon la revendication 7, dans lequel la règle de concours d'hôte comprend une ou plusieurs des règles suivantes :
une unité de surveillance qui avait l'habitude d'être une unité de surveillance hôte est préférable ;
une unité de surveillance qui concourt pour être l'unité de surveillance hôte en premier ou en dernier est préférable ;
une unité de surveillance avec une valeur minimale ou maximale de l'identifiant local transporté dans le message de candidature d'hôte est préférable.
